# EUROPEAN PATENT APPLICATION

(11) **EP 4 710 765 A1**
(43) Date of publication of application: **18.03.2026**
(21) Application number: 24803457.1
(22) Date of filing: 02.05.2024
(51) Int. Cl.: A01N 41/10, A01N 25/10, A01P 15/00, B63B 59/04, C02F 1/00, C08K 5/42, C08L 101/00

(54) **AQUATIC ORGANISM ADHESION PREVENTION MATERIAL AND METHOD FOR MANUFACTURING UNDERWATER STRUCTURE USING SAME**

(30) Priority: 11.05.2023 JP 2023078943
(71) Applicant: Goyo Paper Working Co., Ltd., Osaka-shi, Osaka 559-0003 (JP)
(72) Inventor: ITO, Ryu, Osaka-shi, Osaka 559-0003 (JP); NOMURA, Kyohei, Osaka-shi, Osaka 559-0003 (JP); OKUNAKA, Noriaki, Osaka-shi, Osaka 559-0003 (JP)
(74) Representative: Schlich
(86) International application number: PCT/JP2024/016906
(87) International publication number: WO 2024/232345

(57) **Abstract**

An aquatic organism adhesion prevention material according to the present invention includes an antifouling layer containing an antifouling material and a thermoplastic resin elastomer. The antifouling material includes a methyl p-tolyl sulfone halide, and the thermoplastic elastomer includes a styrene-based elastomer. The aquatic organism adhesion prevention material according to the present invention can be easily attached to and detached from surfaces of structural base materials having various shapes. Also, it is possible to prevent a worker from being exposed to a dangerous work environment during the attachment and detachment, and to provide a safer work environment compared with a case where the structural base materials are coated again.

## Description

### Technical Field

The present invention relates to an aquatic organism adhesion prevention material and a method for manufacturing an underwater structure using the same, and more specifically, relates to an aquatic organism adhesion prevention material that can prevent or suppress adhesion of aquatic organisms to an underwater structure disposed in a seawater area or a fresh water area and a method for manufacturing an underwater structure using the aquatic organism adhesion prevention material.

### Background Art

There are known technologies for preventing adhesion of marine organisms such as barnacles and seaweed by providing a special coating to the bottom of a ship for the purpose of increasing the speed and fuel efficiency of the ship and preventing corrosion of the bottom of the ship and deterioration of the appearance of the ship, for example. A ship bottom coating material used for these purposes contains an antifouling agent that dissolves in seawater little by little from the coated surface to physiologically kill marine organisms, and thus contamination of the bottom of the ship can be prevented. Cuprous oxide and a combination of cuprous oxide and an organic tin compound are mainly used as the antifouling agent.

However, there is a trend of avoiding the use of zinc copper as the antifouling agent due to a growing interest in the contamination of the marine environment in recent years, and various antifouling agents have been proposed.

On the other hand, when a coating material containing an antifouling agent is used, periodic maintenance of the ship is necessary. Meanwhile, in recent years, there are demands for improvement of work environments for workers, and technologies have been proposed for sticking an antifouling film that is a resin molded body such as a tape, a film, or a sheet containing an antifouling agent to a structural base material such as the bottom of a ship, instead of coating the structural base material again.

For example, Patent Document 1 discloses an antifouling adhesive tape obtained by making a silicone resin layer contain an antifouling agent, overlaying the resin layer on a substrate layer, and providing an adhesive layer on the opposite surface of the substrate layer. Patent Document 1 proposes the use of fluid paraffin, silicone oil, surfactants, liquid hydrocarbons, fluoride oil, or antimicrobial agents as the antifouling agent. Patent Document 2 discloses an aquatic organism adhesion prevention adhesive tape including an antifouling layer, a substrate layer, and an adhesive layer. Patent Document 2 proposes the use of a silicone resin together with another resin such as a polyurethane resin, a polyurethane acrylic resin, a rubber-based resin, or a vinyl chloride resin as the substrate layer. Patent Document 3 discloses an aquatic organism adhesion prevention film to be sticked to an underwater structure. Patent Document 3 discloses this film to propose a means for increasing the peel strength in a stretched state, and teaches the use of a silicone resin in an antifouling layer.

Furthermore, Patent Document 4 describes an algae repellent containing a hydroxy benzoic acid ester, and proposes application of the hydroxy benzoic acid ester used in combination with an elastomer such as a styrene-based thermoplastic elastomer to a treatment target such as a ship or a pool. Patent Document 5 discloses an antimold resin composition obtained by adding an organic iodine-based compound such as diiodomethyl p-tolyl sulfone to a polystyrene-based resin or a polyolefin-based resin.

However, surfaces of structural base materials to which these may be applied are not necessarily flat, and such structural base materials often have surfaces having various shapes. Therefore, it is desired to develop an antifouling film having excellent sticking properties. Also, it cannot be said that any of the above technologies has already achieved a sufficient antifouling effect after the film, tape, etc., is attached to a structural base material. Further technological improvement is desired in this regard as well.

### Related Art Documents

### Patent Documents

Patent Document 1: Japanese Laid-Open Patent Publication No. 2015-007201
Patent Document 2: Japanese Laid-Open Patent Publication No. 2013-147629
Patent Document 3: WO 2019/139171
Patent Document 4: Japanese Laid-Open Patent Publication No. 2021-116280
Patent Document 5: Japanese Laid-Open Patent Publication No. 2009-263288

### Summary of Invention

### Problem to be Solved by the Invention

The present invention was made to solve the above problems, and it is an object thereof to provide an aquatic organism adhesion prevention material that can be easily sticked to surfaces of structural base materials having various shapes and can exhibit antifouling properties for a long period of time, and a method for manufacturing an underwater structure using the aquatic organism adhesion prevention material.

### Means for Solving the Problem

The present invention provides an aquatic organism adhesion prevention material comprising an antifouling layer containing an antifouling material and a thermoplastic resin elastomer,
wherein the antifouling material includes a methyl p-tolyl sulfone halide, and
the thermoplastic elastomer includes a styrene-based elastomer.

In one embodiment, the methyl p-tolyl sulfone halide is diiodomethyl p-tolyl sulfone.

In one embodiment, the thermoplastic resin elastomer has a surface hardness of 40 to 75 in accordance with Type A of JIS K6253.

In one embodiment, the antifouling layer has a thickness of 200 µm to 600 µm.

In one embodiment, the aquatic organism adhesion prevention material of the present invention further comprises an adhesive layer provided on one surface side of the antifouling layer.

The present invention also provides a method for manufacturing an underwater structure, comprising sticking the aquatic organism adhesion prevention material to a surface of a structural base material.

### Effects of the Invention

The present invention enables easy attachment and detachment with respect to surfaces of structural base materials having various shapes. Also, it is possible to prevent a worker from being exposed to a dangerous work environment during the attachment and detachment, and to provide a safer work environment compared with a case where surfaces of structural base materials are coated again.

### Brief Description of Drawings

[FIG.1] FIG. 1 is a cross-sectional view taken along a thickness direction and showing an example of an aquatic organism adhesion prevention material according to the present invention.
[FIG. 2] FIG. 2 is a cross-sectional view taken along a thickness direction and showing another example of an aquatic organism adhesion prevention material according to the present invention.
[FIG. 3] FIG. 3 shows photographs showing surface states after aquatic organism adhesion prevention films produced in Examples 1 to 6 were immersed in a seawater area for one month.
[FIG. 4] FIG. 4 shows photographs showing surface states after aquatic organism adhesion prevention films produced in Examples 7 to 10 were immersed in a seawater area for one month.
[FIG. 5] FIG. 5 shows photographs showing surface states after aquatic organism adhesion prevention films produced in Comparative Examples 1 to 5 were immersed in a seawater area for one month.

### Description of Embodiments

The following describes the present invention with reference to the drawings.

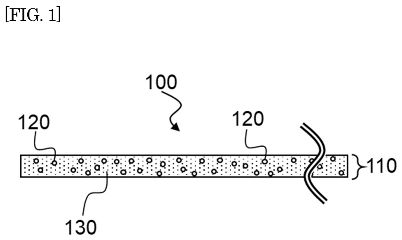

As shown in FIG. 1, an aquatic organism adhesion prevention material 100 according to the present invention includes an antifouling layer 110. The antifouling layer 110 has the shape of a flat film having a uniform thickness, for example, and contains an antifouling material 120 and a thermoplastic elastomer 130.

The antifouling material 120 has the ability to prevent adhesion of aquatic organisms to various base materials in a water area (e.g., a seawater area or a fresh water area), and is sometimes called an antifouling agent. The antifouling material 120 also enables repelling or killing of aquatic organisms, suppression of the proliferation of aquatic organisms, enzyme inhibition on cells of aquatic organisms, or combinations thereof, and may selectively act on a particular aquatic organism or act on aquatic organisms in general. The antifouling agent may also be an antimold agent that acts on aquatic organisms (aquatic plants) such as algae present in the water area.

The aquatic organism adhesion prevention material 100 according to the present invention contains a methyl p-tolyl sulfone halide as the antifouling material 120. Specific examples of the halide include a fluoride, a chloride, a bromide, an iodide, and combinations thereof. The methyl p-tolyl sulfone halide is preferably diiodomethyl p-tolyl sulfone because this is commercially available and can be expected to have an appropriate antifouling effect.

The antifouling material 120 may contain an antifouling component other than the methyl p-tolyl sulfone halide described above. The other antifouling component is not particularly limited, but examples thereof include antimicrobial agents well known in the art; medicines such as medetomidine; enzyme activity inhibiting agents such as alkyl phenol and alkyl resorcinol; antimold agents such as 3-(3,4-dichlorodiphenyl)-1,1-dimethylurea; diatoms adhesion prevention agents such as bis(2-pyridinethiol-1-oxide) metal salts; physical adhesion prevention agents such as wax, petrolatum, plant oil, and fatty acids; and combinations thereof.

For example, the antifouling material 120 is preferably in the form of particles and dispersed substantially uniformly in the antifouling layer 110.

The amount of the antifouling material 120 contained in the antifouling layer 110 is not necessarily limited, but is preferably 2% by mass to 20% by mass, and more preferably 3% by mass to 10% by mass with respect to the mass of the whole antifouling layer 110, for example. If the amount of the antifouling material contained in the antifouling layer is less than 2% by mass, the amount of the antifouling material contained in the antifouling layer is too small, and therefore, the obtained adhesion prevention material may not exhibit a sufficient effect of preventing adhesion of aquatic organisms. If the amount of the antifouling material contained in the antifouling layer is more than 20% by mass, the amount of the antifouling material contained in the antifouling layer is too large, and therefore, the antifouling material cannot be appropriately retained in the thermoplastic elastomer, which will be described later, and will easily separate in a water area, and it may be difficult to maintain the effect of preventing adhesion of aquatic organisms for a relatively long period of time.

The thermoplastic elastomer 130 is for maintaining the layer structure of the antifouling layer 110, comes into direct contact with a water area in which the aquatic organism adhesion prevention material is disposed, and serves to prevent adhesion of aquatic organisms to the surface thereof.

The aquatic organism adhesion prevention material 100 according to the present invention contains a styrene-based elastomer as the thermoplastic elastomer 130. The styrene-based elastomer itself is transparent or semitransparent, and is useful in the present invention because it is easy to color and has excellent molding processability in injection molding, extrusion molding, etc.

Examples of the styrene-based elastomer include a styrene-ethylene-propylene block copolymer (SEP), a styrene-ethylene-propylene-styrene block copolymer (SEPS), a styrene-ethylene-ethylene-propylene-styrene block copolymer (SEEPS), a styrenebutadiene-styrene block copolymer (SBS), a styrene-ethylene-butylene-styrene block copolymer (SEBS), a styrene-isoprene-styrene block copolymer (SIS), and combinations thereof.

The aquatic organism adhesion prevention material 100 according to the present invention may also contain an elastomer other than the styrene-based elastomer, as the thermoplastic elastomer 130. Examples of the other elastomer include a polyamide-based elastomer, a polyurethane-based thermoplastic elastomer, a polyester-based elastomer, an olefin-based elastomer, a vinyl chloride-based elastomer, a fluorine-based thermoplastic elastomer, syndiotactic 1,2-polybutadiene, and combinations thereof.

Preferably, the thermoplastic elastomer itself has predetermined surface hardness. For example, the thermoplastic elastomer has a surface hardness of preferably 40 to 75, and more preferably 45 to 72 in accordance with Type A of JIS K6253. If the surface hardness of the thermoplastic elastomer is within this range, it is possible to prevent or suppress adhesion of aquatic organisms for a longer period of time even when the aquatic organism adhesion prevention material is immersed in a water area.

The amount of the thermoplastic elastomer 130 contained in the antifouling layer 110 is not necessarily limited, but is preferably 80% by mass to 98% by mass, and more preferably 90% by mass to 97% by mass with respect to the mass of the whole antifouling layer 110, for example. If the amount of the thermoplastic elastomer contained in the antifouling layer is less than 80% by mass, moldability of the obtained adhesion prevention material degrades, it becomes difficult to retain the antifouling material, and the adhesion prevention material may become powdery. If the amount of the thermoplastic elastomer contained in the antifouling layer is more than 98% by mass, the relative amount of the antifouling material contained in the obtained adhesion prevention material decreases, and it may be difficult to achieve sufficient antifouling properties.

In the present invention, the antifouling layer 110 may contain another resin and another additive within a range in which the efficacy, molding processability, etc., of the antifouling material 120 and the thermoplastic elastomer 130 described above are not impaired.

Examples of the other resin that may be contained in the antifouling layer 110 are not necessarily limited, but include polyolefin-based resins and modified products thereof, and ethylene-based ionomers. Examples of polyolefin-based resins include a homopolymer of ethylene, a copolymer of ethylene and an α-olefin other than ethylene in which the content of the ethylene component is more than 50% by weight, a homopolymer of propylene, a copolymer of propylene and an α-olefin other than propylene in which the content of the propylene component is more than 50% by weight, a homopolymer of butene, and a homopolymer or copolymer of a conjugated diene such as butadiene and isoprene.

Examples of the other additive that may be contained in the antifouling layer 110 are not necessarily limited, but include an antioxidant (e.g., a phenol-based antioxidant, a sulfur-based antioxidant, and/or a phosphorus-based antioxidant); a UV absorbent (e.g., a benzophenone-based UV absorbent and/or a benzotriazole-based UV absorbent); an antistatic agent (e.g., an anionic activator, a cationic activator, a nonionic activator, and/or an amphoteric activator); a clarifying agent (e.g., a carboxylic acid metal salt, sorbitols, and/or a phosphoric acid ester metal salt); a lubricant (e.g., a hydrocarbon-based lubricant, a fatty acid-based lubricant, a higher alcohol-based lubricant, a fatty acid amide-based lubricant, a metal soap-based lubricant, and/or an ester-based lubricant); a flame retardant (e.g., an organic flame retardant and/or an inorganic flame retardant); a plasticizer (e.g., epoxidized plant oil, phthalic acid esters, and/or a polyester-based plasticizer); and combinations threrof. The content of the other additive is not particularly limited, and a suitable amount may be selected by those skilled in the art.

The antifouling layer 100 of the aquatic organism adhesion prevention material 100 according to the present invention is designed to have a predetermined thickness so that the antifouling layer can withstand erosion by the movement of a fluid (e.g., waves and tides) in a water area for a relatively long period of time while an absolute amount of the antifouling material 120 contained in the antifouling layer is secured to be large. The thickness of the antifouling layer 100 is preferably 200 µm to 600 µm, and more preferably 400 µm to 600 µm. If the thickness of the antifouling layer is less than 200 µm, the absolute amount of the antifouling material that can be contained in the antifouling layer becomes small, and accordingly, it becomes difficult to use the obtained adhesion prevention material in a water area for a relatively long period of time, and the adhesion prevention material may need to be replaced early. If the thickness of the antifouling layer is more than 600 µm, it becomes difficult for the antifouling material inside the antifouling layer disposed in a water area to appear in the water area, and a sufficient effect of preventing adhesion of aquatic organisms may not be achieved.

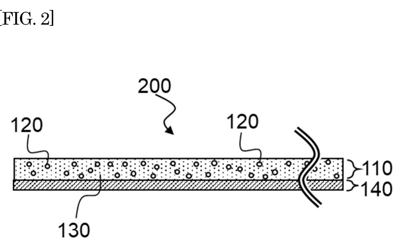

FIG. 2 is a cross-sectional view taken along a thickness direction and showing another example of the aquatic organism adhesion prevention material according to the present invention.

In an aquatic organism adhesion material 200 according to the present invention shown in FIG. 2, an adhesive layer 140 is provided on one surface of the antifouling layer 110 shown in FIG. 1.

The adhesive layer 140 has sufficient adhesiveness to an underwater structure in water and is constituted by an adhesive that has waterproofness, for example. Examples of the adhesive constituting the adhesive layer 140 include an acrylic resin-based adhesive, an epoxy resin-based adhesive, an amino resin-based adhesive, a vinyl resin-based adhesive, a curable acrylic resin adhesive, and combinations thereof.

The thickness of the adhesive layer 140 is not particularly limited, but is preferably 10 µm to 40 µm, and more preferably 20 µm to 30 µm. If the adhesive layer 140 has a thickness within this range, it is possible to control peeling properties of the adhesive layer.

Although an example in which the adhesive layer 140 is disposed to be in contact with one surface of the antifouling layer 110 has been described regarding the aquatic organism adhesion prevention material 200 shown in FIG. 2, the present invention is not limited to this configuration. A chemical barrier layer (not shown) such as an aluminum foil or a polyolefin layer may be provided between the antifouling layer 110 and the adhesive layer 140. The thickness of the chemical barrier layer is not particularly limited, and those skilled in the art may select an appropriate thickness within a range in which the effects of the present invention achieved with the antifouling layer 110 and the adhesive layer 140 described above are not impaired.

In the present invention, the antifouling material and the thermoplastic elastomer described above are melted and kneaded, and then subjected to, for example, extrusion molding or injection molding using a method known by those skilled in the art to form the antifouling layer. The adhesive layer may be disposed at the same time as the formation of the antifouling layer, or may be disposed after the antifouling layer is formed.

The aquatic organism adhesion prevention material according to the present invention is used by being sticked to surfaces of structural base materials used in various water areas such as a seawater area, a fresh water area, and a brackish water area. Examples of the structural base materials include various metal materials such as a steel plate, various plastic materials such as fiber-reinforced plastics, concrete, ceramic, glass, and wood. It is possible to manufacture various underwater structures by sticking the aquatic organism adhesion prevention material according to the present invention to the structural base materials. Examples of such underwater structures are not particularly limited, but include a ship's body, bottom, screw, anchor, rudder, and oar; a tetra pod; a bridge pier; a float of a marine power generator; various buoys; a water bath; a fish reef; a seawater inlet port; a fishing net; a fishing basket; an aquaculture net; a pool; a laver cultivation net; a fishing gear; a house (e.g., an exterior wall, a roof, a kitchen, a lavatory, a veranda, a storage shed, etc.); and gardening tools such as a flowerpot, a planter, and a seeding pot.

Furthermore, aquatic organisms of which adhesion can be prevented by an underwater structure including the aquatic organism adhesion prevention material according to the present invention include any organisms such as animals, plants, and microorganisms. Specific examples of the aquatic organisms include shellfish such as barnacle, hard-shelled mussel, and oyster; algae such as diatoms, seaweed, and waterweed; biofilms such as spirogyra; and hydrozoa.

### Examples

The following describes the present invention in detail using examples, but the present invention is not limited to these examples.

### (Example 1: Production and evaluation of aquatic organism adhesion prevention film (E1))

An aquatic organism adhesion prevention film (E1) with a thickness of 400 µm was obtained by kneading 95% by mass of a styrene-based thermoplastic elastomer (AR-710N manufactured by ARONKASEI CO., LTD.) having a surface hardness of 70 and 5% by mass of diiodomethyl p-tolyl sulfone (PacificBeam MOLD MARINE II manufactured by M.I.C. Co., Ltd.), which is an antifouling agent, and extruding the mixture at an extrusion resin temperature of 200°C using a T-die extruder.

Three samples having a size of 10 cm×10 cm were cut out from the obtained aquatic organism adhesion prevention film (E1), holes (about 8 mm) for fixing were formed at four corners of each sample, each sample was fixed using the holes at the four corners on a wire net having about 1.0 cm square sections, and the wire net was immersed in water at a depth of about 4 m for one month in summer (from June to July, 2022) at Sakai port in Sakai City, Osaka.

After one month elapsed, the wire net was pulled up, and three panelists visually observed the state of the three samples, and classified the samples by determining contamination levels of the samples in accordance with the following criteria.
5 points: Adhesion of aquatic organisms to the sample was not observed.
4 points: Aquatic organisms hardly adhered to the sample, or adhered to the sample but could be easily removed with a finger.
3 points: Aquatic organisms adhered to about 20% of the surface of the sample.
2 points: Aquatic organisms adhered to about 30% of the surface of the sample.
1 point: Aquatic organisms adhered to about 50% or more of the surface of the sample.

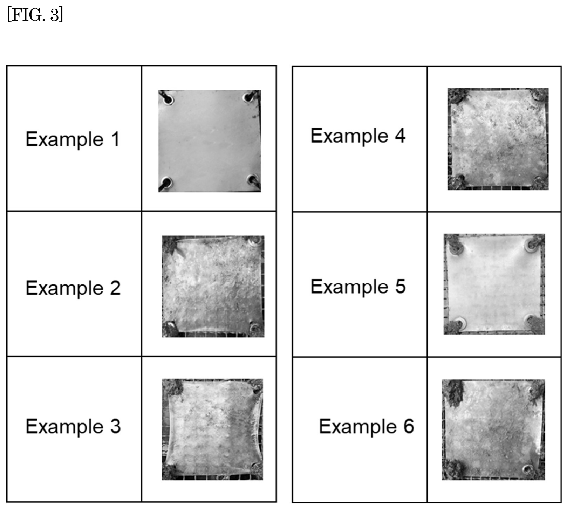

Table 1 shows the result and FIG. 3 shows a photograph showing the state of the film.

### (Example 2: Production and evaluation of aquatic organism adhesion prevention film (E2))

An aquatic organism adhesion prevention film (E2) was produced in the same manner as in Example 1, except that 95% by mass of a styrene-based thermoplastic elastomer (AR-SC5 manufactured by ARONKASEI CO., LTD.) having a surface hardness of 3 was used instead of the styrene-based thermoplastic elastomer having a surface hardness of 70, and samples were produced from this film (E2) and immersed in the seawater area for one month in the same season in the same manner as in Example 1. Table 1 shows the obtained result and FIG. 3 shows a photograph showing the state of the film.

### (Example 3: Production and evaluation of aquatic organism adhesion prevention film (E3))

An aquatic organism adhesion prevention film (E3) was produced in the same manner as in Example 1, except that 95% by mass of a styrene-based thermoplastic elastomer (AR-SC15 manufactured by ARONKASEI CO., LTD.) having a surface hardness of 13 was used instead of the styrene-based thermoplastic elastomer having a surface hardness of 70, and samples were produced from this film (E3) and immersed in the seawater area for one month in the same season in the same manner as in Example 1. Table 1 shows the obtained result and FIG. 3 shows a photograph showing the state of the film.

### (Example 4: Production and evaluation of aquatic organism adhesion prevention film (E4))

An aquatic organism adhesion prevention film (E4) was produced in the same manner as in Example 1, except that 95% by mass of a styrene-based thermoplastic elastomer (AR-SC45 manufactured by ARONKASEI CO., LTD.) having a surface hardness of 41 was used instead of the styrene-based thermoplastic elastomer having a surface hardness of 70, and samples were produced from this film (E4) and immersed in the seawater area for one month in the same season in the same manner as in Example 1. Table 1 shows the obtained result and FIG. 3 shows a photograph showing the state of the film.

### (Example 5: Production and evaluation of aquatic organism adhesion prevention film (E5))

An aquatic organism adhesion prevention film (E5) was produced in the same manner as in Example 1, except that 95% by mass of a styrene-based thermoplastic elastomer (AR-FL60 manufactured by ARONKASEI CO., LTD.) having a surface hardness of 60 was used instead of the styrene-based thermoplastic elastomer having a surface hardness of 70, and samples were produced from this film (E5) and immersed in the seawater area for one month in the same season in the same manner as in Example 1. Table 1 shows the obtained result and FIG. 3 shows a photograph showing the state of the film.

### (Example 6: Production and evaluation of aquatic organism adhesion prevention film (E6))

An aquatic organism adhesion prevention film (E6) was produced in the same manner as in Example 1, except that 95% by mass of a styrene-based thermoplastic elastomer (AR-SC75 manufactured by ARONKASEI CO., LTD.) having a surface hardness of 73 was used instead of the styrene-based thermoplastic elastomer having a surface hardness of 70, and samples were produced from this film (E6) and immersed in the seawater area for one month in the same season in the same manner as in Example 1. Table 1 shows the obtained result and FIG. 3 shows a photograph showing the state of the film.

### (Example 7: Production and evaluation of aquatic organism adhesion prevention film (E7))

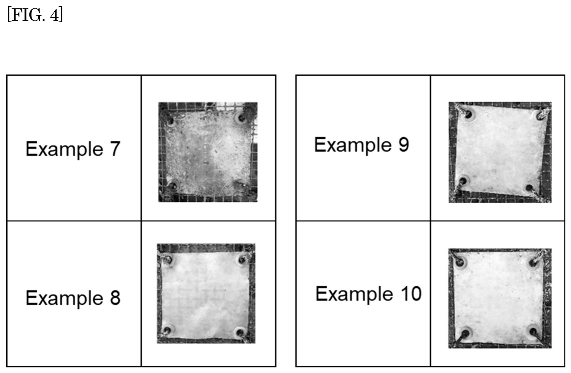

An aquatic organism adhesion prevention film (E7) was produced in the same manner as in Example 1, except that 97% by mass of a styrene-based thermoplastic elastomer (AR-FL60 manufactured by ARONKASEI CO., LTD.) having a surface hardness of 60 was used instead of the styrene-based thermoplastic elastomer having a surface hardness of 70 and the content of diiodomethyl p-tolyl sulfone was changed to 3% by mass, and samples were produced from this film (E7) and immersed in the seawater area for one month in the same season in the same manner as in Example 1. Table 1 shows the obtained result and FIG. 4 shows a photograph showing the state of the film.

### (Example 8: Production and evaluation of aquatic organism adhesion prevention film (E8))

An aquatic organism adhesion prevention film (E8) was produced in the same manner as in Example 1, except that 93% by mass of a styrene-based thermoplastic elastomer (AR-FL60 manufactured by ARONKASEI CO., LTD.) having a surface hardness of 60 was used instead of the styrene-based thermoplastic elastomer having a surface hardness of 70 and the content of diiodomethyl p-tolyl sulfone was changed to 7% by mass, and samples were produced from this film (E8) and immersed in the seawater area for one month in the same season in the same manner as in Example 1. Table 1 shows the obtained result and FIG. 4 shows a photograph showing the state of the film.

### (Example 9: Production and evaluation of aquatic organism adhesion prevention film (E9))

An aquatic organism adhesion prevention film (E9) was produced in the same manner as in Example 1, except that 90% by mass of a styrene-based thermoplastic elastomer (AR-FL60 manufactured by ARONKASEI CO., LTD.) having a surface hardness of 60 was used instead of the styrene-based thermoplastic elastomer having a surface hardness of 70 and the content of diiodomethyl p-tolyl sulfone was changed to 10% by mass, and samples were produced from this film (E9) and immersed in the seawater area for one month in the same season in the same manner as in Example 1. Table 1 shows the obtained result and FIG. 4 shows a photograph showing the state of the film.

### (Example 10: Production and evaluation of aquatic organism adhesion prevention film (E10))

An aquatic organism adhesion prevention film (E10) was produced in the same manner as in Example 1, except that 86% by mass of a styrene-based thermoplastic elastomer (AR-FL60 manufactured by ARONKASEI CO., LTD.) having a surface hardness of 60 was used instead of the styrene-based thermoplastic elastomer having a surface hardness of 70 and the content of diiodomethyl p-tolyl sulfone was changed to 14% by mass, and samples were produced from this film (E10) and immersed in the seawater area for one month in the same season in the same manner as in Example 1. Table 1 shows the obtained result and FIG. 4 shows a photograph showing the state of the film.

### (Comparative Example 1: Production and evaluation of silicone resin film (C1))

A silicone resin (Silicone W Electro 225-1 manufactured by Shin-Etsu Chemical Co., Ltd.) was applied to a flat support plate and irradiated with UV rays to form a silicone thin film. The silicone resin was further applied to the silicone thin film and irradiated with UV rays. By performing the application of the silicone resin and UV irradiation, a silicone resin film (C1) with a thickness of 400 µm was obtained.

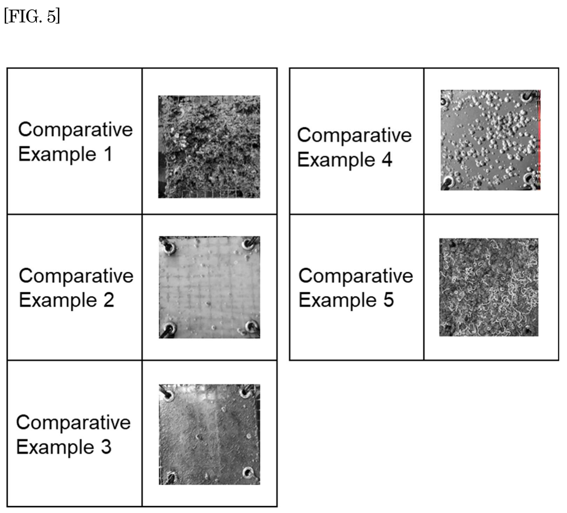

Samples were produced in the same manner as in Example 1, except that the silicone resin film (C1) was used instead of the aquatic organism adhesion prevention film (E4) produced in Example 1, and the samples were immersed in the seawater area for one month in the same season in the same manner as in Example 1. Table 1 shows the obtained result and FIG. 5 shows a photograph showing the state of the film.

### (Comparative Example 2: Production and evaluation of low-density polyethylene film (C2))

A low-density polyethylene film (C2) was produced in the same manner as in Example 1, except that 95% by mass of low-density polyethylene (SUMIKATHENE L405 manufactured by SUMITOMO CHEMICAL COMPANY, LIMITED) was used instead of the styrene-based thermoplastic elastomer having a surface hardness of 70, and samples were produced from this film (C2) and immersed in the seawater area for one month in the same season in the same manner as in Example 1. Table 1 shows the obtained result and FIG. 5 shows a photograph showing the state of the film.

### (Comparative Example 3: Production and evaluation of polylactic acid film (C3))

A polylactic acid film (C3) was produced in the same manner as in Example 1, except that 95% by mass of polylactic acid was used instead of the styrene-based thermoplastic elastomer having a surface hardness of 70, and samples were produced from this film (C3) and immersed in the seawater area for one month in the same season in the same manner as in Example 1. Table 1 shows the obtained result and FIG. 5 shows a photograph showing the state of the film.

### (Comparative Example 4: Evaluation and evaluation of PET film (C4))

Samples were produced in the same manner as in Example 1, except that a commercially available polyethylene terephthalate (PET) film (C4) with a thickness of 75 µm was used instead of the aquatic organism adhesion prevention film (E1) produced in Example 1. A commercially available red coating material for the bottom of a ship was applied to only one surface (back surface) of each sample, and the samples were immersed in the seawater area for one month in the same season in the same manner as in Example 1. Table 1 shows the obtained result and FIG. 5 shows a photograph showing the state of the film as viewed from the other surface (front surface) of the film (C4).

### (Comparative Example 5: Production and evaluation of EVA resin film (C5))

An EVA resin film (C5) was produced in the same manner as in Example 1, except that 95% by mass of an EVA resin (an ethylene-vinyl acetate copolymer resin) was used instead of the styrene-based thermoplastic elastomer having a surface hardness of 70 and 5% by mass of hexyl benzoate (hexylparaben GK-II manufactured by UENO FINE CHEMICALS INDUSTRY, LTD.), which is an antimicrobial agent, was used instead of diiodomethyl p-tolyl sulfone, and samples were produced from this film (C5) and immersed in the seawater area for one month in the same season in the same manner as in Example 1. Table 1 shows the obtained result and FIG. 5 shows a photograph showing the state of the film.

**[Table 1]**

| | Name of Film Produced | Resin Used | | | Antifouling Agent | | Thickness (µm) | Contamination Levels | Panelists' Comments |
|---|---|---|---|---|---|---|---|---|---|
| | | Name | Surface Hardness | Content (% by mass) | Name | Content (% by mass) | | | |
| Example 1 | E1 | Styrene-Based Thermoplastic Elastomer | 70 | 95 | Diiodomethyl p-Tolyl Sulfone | 5 | 400 | 5 | There was no biofilm or shellfish attachment |
| Example 2 | E2 | Styrene-Based Thermoplastic Elastomer | 3 | 95 | Diiodomethyl p-Tolyl Sulfone | 5 | 400 | 4 | Slight biofilm attachment was confirmed. |
| Example 3 | E3 | Styrene-Based Thermoplastic Elastomer | 13 | 95 | Diiodomethyl p-Tolyl Sulfone | 5 | 400 | 4 | Slight biofilm attachment was confirmed. |
| Example 4 | E4 | Styrene-Based Thermoplastic Elastomer | 41 | 95 | Diiodomethyl p-Tolyl Sulfone | 5 | 400 | 5 | No shellfish attachment was observed, but biofilm attachment was confirmed in a very limited area. |
| Example 5 | E5 | Styrene-Based Thermoplastic Elastomer | 60 | 95 | Diiodomethyl p-Tolyl Sulfone | 5 | 400 | 5 | There was no biofilm or shellfish attachment |
| Example 6 | E6 | Styrene-Based Thermoplastic Elastomer | 73 | 95 | Diiodomethyl p-Tolyl Sulfone | 5 | 400 | 5 | Adhesion was observed around the four corner holes, but no other adhesion was observed on the rest of the sample surface. |
| Example 7 | E7 | Styrene-Based Thermoplastic Elastomer | 60 | 97 | Diiodomethyl p-Tolyl Sulfone | 3 | 400 | 4 | Slight biofilm attachment was confirmed. |
| Example 8 | E8 | Styrene-Based Thermoplastic Elastomer | 60 | 93 | Diiodomethyl p-Tolyl Sulfone | 7 | 400 | 5 | There was no biofilm or shellfish attachment |
| Example 9 | E9 | Styrene-Based Thermoplastic Elastomer | 60 | 90 | Dilodomethyl p-Tolyl Sulfone | 10 | 400 | 5 | There was no biofilm or shellfish attachment |
| Example 10 | E10 | Styrene-Based Thermoplastic Elastomer | 60 | 86 | Diiodomethyl p-Tolyl Sulfone | 14 | 400 | 5 | There was no biofilm or shellfish attachment |
| Comparative Example **1** | C1 | Silicone Resin | - | 100 | None | - | 400 | 1 | It was heavily encrusted with shellfish. |
| Comparative Example 2 | C2 | Low-Density Polyethylene | - | 95 | Diiodomethyl p-Tolyl Sulfone | 5 | 400 | 3 | Approximately 20% of the surface was confirmed to have shellfish attachment, with further growth predicted in the future. |
| Comparative Example 3 | C3 | Polylactic Acid | - | 95 | Diiodomethyl p-Tolyl Sulfone | 5 | 400 | 3 | Approximately 20% of the surface was confirmed to have shellfish attachment, with further growth predicted in the future. |
| Comparative Example 4 | C4 | Polyethylene Terephthalate | - | 100 | None | - | 75 | 2 | The paint on the reverse side was visible, but approximately 30% of the surface was confirmed to have shellfish attached, with further growth predicted in the future. |
| Comparative Example 5 | C5 | Ethylene-Vinyl Acetate Copolymer Resin | - | 95 | Hexyl Benzoate | 5 | 200 | 1 | Hydrozoan attachment was confirmed. |

As shown in Table 1 and FIGS. 3 to 5, adhesion of shellfish and biofilms to the aquatic organism adhesion prevention films (E1) to (E10) produced in Examples 1 to 10 was not observed at all or was hardly observed, and it can be found that the adhesion of aquatic organisms was effectively prevented when compared with the films (C1) to (C6) produced in Comparative Examples 1 to 5. Also, as is apparent from a comparison between the surface hardnesses of the styrene-based thermoplastic elastomers used in Examples 1 to 6 and the contamination levels, the higher the surface hardness of the styrene-based thermoplastic elastomer used was, the further the adhesion of aquatic organisms to the samples of the obtained film was suppressed. Moreover, as is apparent from the results of Examples 8 to 10 (Table 1 and FIG. 4), the higher the content of the antifouling agent in the produced film was, the less the adhesion of aquatic organisms observed on the film surface was, and such a film was not eroded and did not collapse in one month.

### Industrial Applicability

The present invention is useful in various technical fields such as shipbuilding, fishing, marine research, submarine earthquake prediction, tide observation, submarine volcano observation, marine city construction, submarine cable communication, architecture, and gardening.

### Reference Signs List

- 100, 200: Aquatic organism adhesion prevention material
- 110: Antifouling layer
- 120: Antifouling material
- 130: Thermoplastic elastomer
- 140: Adhesive layer

## Claims

1. An aquatic organism adhesion prevention material comprising an antifouling layer containing an antifouling material and a thermoplastic resin elastomer,
wherein the antifouling material includes a methyl p-tolyl sulfone halide, and
the thermoplastic elastomer includes a styrene-based elastomer.

2. The aquatic organism adhesion prevention material according to claim 1, wherein the methyl p-tolyl sulfone halide is diiodomethyl p-tolyl sulfone.

3. The aquatic organism adhesion prevention material according to claim 1, wherein the thermoplastic resin elastomer has a surface hardness of 40 to 75 in accordance with Type A of JIS K6253.

4. The aquatic organism adhesion prevention material according to claim 1, wherein the antifouling layer has a thickness of 200 µm to 600 µm.

5. The aquatic organism adhesion prevention material according to claim 1, further comprising an adhesive layer provided on one surface side of the antifouling layer.

6. A method for manufacturing an underwater structure, comprising:
sticking the aquatic organism adhesion prevention material according to any one of claims 1 to 5 to a surface of a structural base material.
